Europäisches Patentamt

European Patent Office

Office européen des brevets

(19)

(11) Numéro de publication: **0 228 313**
**A1**

(12)

# DEMANDE DE BREVET EUROPEEN

(21) Numéro de dépôt: **86402424.5**

(22) Date de dépôt: **29.10.86**

(51) Int. Cl.⁴: **B 29 C 47/12,** B 60 S 1/38

(30) Priorité: **30.10.85 FR 8516145**

(43) Date de publication de la demande: **08.07.87**
**Bulletin 87/28**

(84) Etats contractants désignés: **AT BE CH DE GB IT LI LU**
**NL SE**

(71) Demandeur: **Charpentier, Claude, 3, rue de Courcelles**
**Le Boisgeloup, F-27140 Gisors (FR)**
Demandeur: **Vannier, Etienne, 33, Rue Cappeville,**
**F-27140 Gisors (FR)**

(72) Inventeur: **Charpentier, Claude, 3, Rue de Courcelles Le**
**Boisgeloup, F-27140 Gisors (FR)**
Inventeur: **Vannier, Etienne, 33, Rue Cappeville,**
**F-27140 Gisors (FR)**
Inventeur: **Genet, Roger, Talmontiers,**
**F-60590 Serifontaine (FR)**

(54) **Dispositif d'essuyage par essuie-glace obtenu par extrusion.**

(57)    Profil en caoutchouc extrudé intégrant une lamelle métallique ou plastique et procédé de fabrication de ce profil. Le
noyau (11) de la filière (10) comprend des passages d'air (12,
13) et des orifices (14) destinés à injecter la matière. Le profil
en caoutchouc (5) comprend un orifice (9) dans lequel une
lamelle galbée (6) est enfilée.

EP 0 228 313 A1

La présente invention concerne un dispositif d'essuyage par essuie-glace obtenu par extrusion.

La figure 1 représente un essuie-glace.

Un balai d'essuie-glace est généralement constitué d'une attache (1), d'un grand pont (2), de deux petits ponts (3) et d'un ensemble d'essuyage (4). Le tout est de couleur noire anti-reflet.

L'état actuel de la technique comporte deux conceptions différentes de l'ensemble d'essuyage (4).

La figure 2 représente, en coupe, la première conception de l'ensemble d'essuyage (4).

La figure 3 représente, en coupe, la seconde conception de l'ensemble d'essuyage (4).

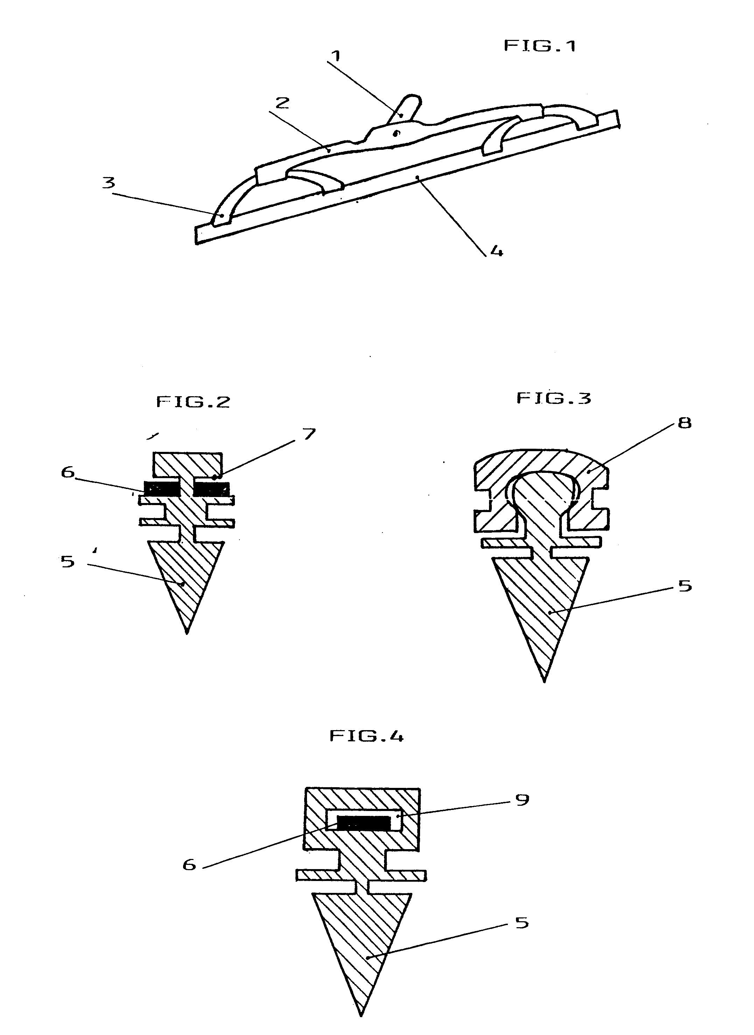

Le dispositif d'essuyage (4) sur la figure 2 comprend un profil caoutchouc (5) et deux lamelles en acier inoxydable (6).

Ces lamelles (6) sont insérées dans des rainures (7) contribuant à l'affaiblissement du profil. Ces rainures (7) sont le lieu de concentrations de contraintes importantes. De plus, les parties saillantes des lamelles n'évitent pas les risques de blessures.

Le dispositif d'essuyage (4) sur la figure 3 comprend un profil en caoutchouc (5) et une gaine plastique (8).

Cette gaine (8) ne permet pas, de par sa nature, de répartir uniformément la pression au contact caoutchouc pare-brise.

Le dispositif, selon l'invention, permet de remédier à ces inconvénients. Il comporte un profil creux en caoutchouc extrudé dans lequel une lamelle d'acier est introduite. Cette lamelle d'acier comporte une flèche f de façon à obtenir une pression uniforme le long du caoutchouc au contact du pare-brise.

La figure 4 représente, en coupe, le dispositif selon l'invention.

Le dispositif représenté sur la figure 4 comporte un profil en caoutchouc extrudé (5) traversé de part en part dans sa partie supérieure par un orifice parallélépipèdique (9) dans lequel une lamelle (6) métallique ou plastique de même forme est insérée.

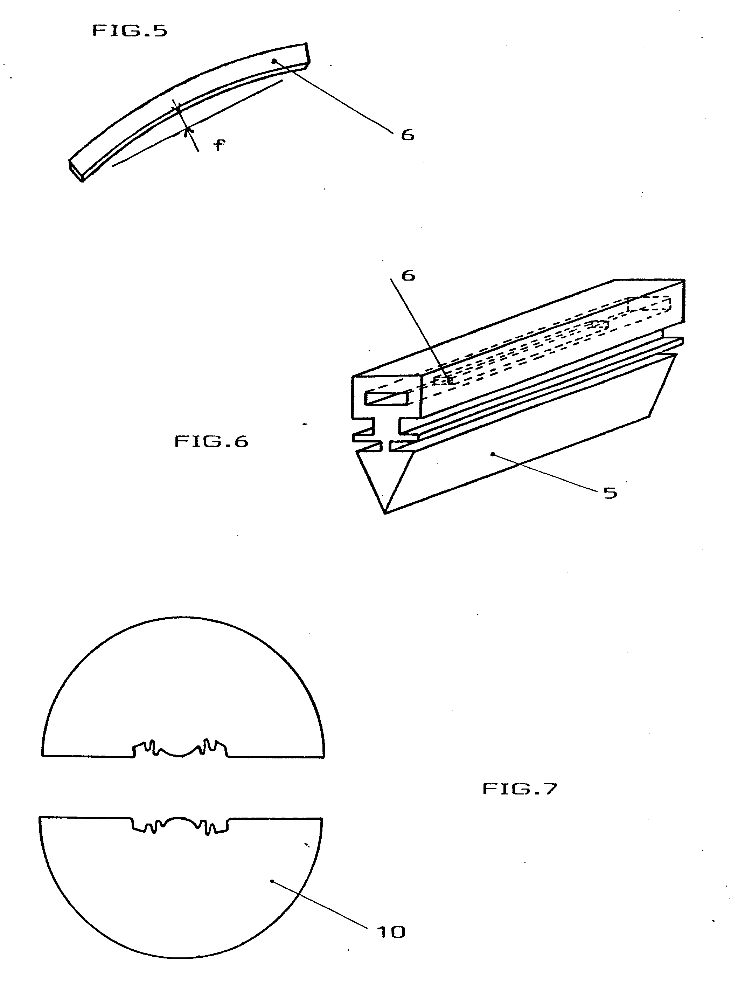

La figure 5 représente la lamelle (6) à insérer dans le dispositif selon l'invention.

La lamelle (6) représentée sur la figure 5 est préalablement:

- coupée à longueur.

- galbée suivant une flèche f déterminée en fonction de la pression du bras et du pare-brise.

2

Elle constitue l'élément rigidifiant et répartiteur de pression de l'ensemble d'essuyage (4).

La figure 6 représente, en vue générale, l'ensemble d'essuyage (4) selon l'invention.

Le dispositif d'essuyage (4) selon la figure 6 montre le montage de la lamelle (6) à l'intérieur du profil caoutchouc (5).

La lamelle (6) plus courte que le profil caoutchouc (5) est centrée par rapport aux extrémités. Selon le type d'assemblage l'extrémité du profil peut:

- resté libre

- être fermée par un obturateur

- être collée

Le profil caoutchouc (5) sera obtenu en extrusion sur une machine à tête de cisaillement.

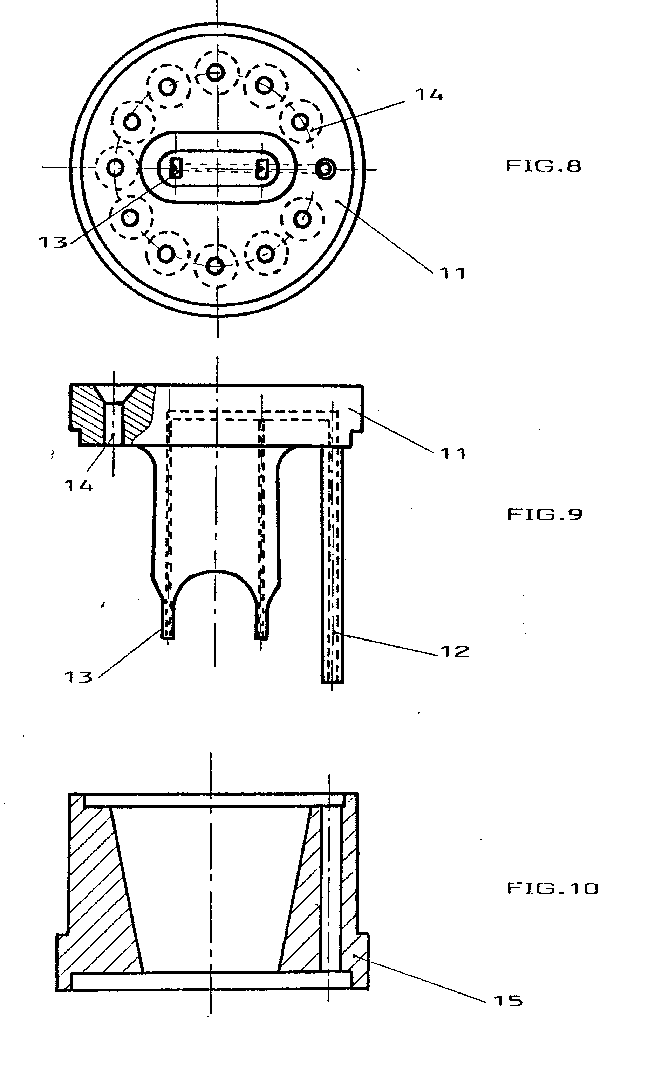

La figure 7 représente la filière 10.

La figure 8 représente, en vue de dessous, le noyau (11).

La figure 9 représente, en vue de face, le noyau (11).

La figure 10 représente, en coupe, le cône d'alimentation (15).

La forme du noyau sera réalisée de façon à obtenir le profil caoutchouc (5) selon l'invention.

Le noyau (11) selon la figure 9 se décompose en un tube d'amenée d'air cylindrique (12), de deux extrémités parallélépipédiques (13) percées dans leur longueur de façon à engendrer un jet d'air, et de plusieurs orifices (14) destinés à injecter la matière. Ces orifices (14) au nombre de onze par exemple sont répartis le long d'une circonférence.

3

REVENDICATIONS

1)Procédé de fabrication par extrusion d'un profil en caoutchouc (5) caractérisé en ce que le noyau (11) de la filière (10) se décompose en un tube d'amenée d'air cylindrique (12), de deux extrémités parallélépipèdiques (13) percées dans leur longueur de façon à engendrer un jet d'air, et de plusieurs orifices (14) destinés à injecter la matière . Ces orifices (14) sont répartis le long d'une circonférence .

2)Profil en caoutchouc obtenu selon le procédé décrit dans la revendication 1 caractérisé en ce qu'il comporte un orifice (9) dans lequel une lamelle métallique (6) est enfilée .

3)Profil selon l'une quelconque des revendications précédentes caractérisé en ce que l'orifice (9) est de forme parallélépipèdique ou cylindrique .

4)Profil selon l'une quelconque des revendications précédentes caractérisé en ce que l'orifice (9) est situé dans sa partie supérieure .

5)Profil selon l'une quelconque des revendications précédentes caractérisé en ce que l'orifice (9) le traverse .

6)Dispositif selon l'une quelconque des revendications précédentes caractérisé en ce que la lamelle (6) galbée suivant une flèche f est insérée dans l'orifice (9) et est centrée par rapport aux extrémités .

0228313

FIG.1

1

2

3

4

FIG.2

7

6

5

FIG.3

8

5

FIG.4

9

6

5

FIG.5

f

6

FIG.6

6

5

FIG.7

10

0228313

FIG.8

14

13

11

FIG.9

14

11

13

12

FIG.10

15

Office européen
des brevets

**RAPPORT DE RECHERCHE EUROPEENNE**

0228313

Numéro de la demande

EP 86 40 2424

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | EP-A-0 147 583 (W.A. SCHIESSER) <br> * En entier * | 1 | B 29 C 47/12 <br> B 60 S 1/38 |
| | --- | | |
| A | DE-B-1 000 991 (H.H. MÜLLER) <br> * Colonne 3, lignes 42-52; figure 1 * | 1 | |
| | --- | | |
| A | US-A-3 744 947 (M. SKOBEL) <br> * Colonne 2, lignes 27-49; figures 1,2 * | 1 | |
| | --- | | |
| A | FR-A-2 267 909 (DUCELLIER & CIE) <br> * Page 1, ligne 36 - page 2, ligne 3; figures 1-3 * | 2-6 | |
| | --- | | **DOMAINES TECHNIQUES RECHERCHES (Int. Cl.4)** |
| A | FR-A-2 226 841 (R. BOSCH GmbH) <br> * Page 3, ligne 30 - page 4, ligne 1,11-21; figures 1,3-5 * | 2-6 | B 60 S <br> B 29 C |
| | ----- | | |

Le présent rapport de recherche a été établi pour toutes les revendications

| Lieu de la recherche | Date d'achèvement de la recherche | Examinateur |
|---|---|---|
| LA HAYE | 05-02-1987 | VERLEYE J. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

OEB Form 1503 03 82